# EUROPÄISCHE PATENTANMELDUNG

(11) **EP 1 010 597 A2**
(43) Veröffentlichungstag der Anmeldung: **21.06.2000**
(21) Anmeldenummer: 99124672.9
(22) Anmeldetag: 10.12.1999
(51) Int. Cl.: B60T 13/22, B60T 15/04, B60T 7/06

(54) **Fahrzeug, insbesondere Flurförderzeug, mit einer Betriebsbremse und einer Speicherbremse**

(30) Priorität: 17.12.1998 DE 19858472
(71) Anmelder: FIAT OM CARRELLI ELEVATORI S.p.A., 20141 Milano (IT)
(72) Erfinder: Parente, Sante, 70042 Mola di Bari (BA) (IT)
(74) Vertreter: Kasseckert, Rainer

(57) **Zusammenfassung**

Die Erfindung betrifft ein Fahrzeug, insbesondere ein Flurförderzeug, mit einer Betriebsbremse (7) und einer Speicherbremse (18). Die Aufgabe, ein derartiges Flurförderzeug zur Verfügung zu stellen, das bei einem Defekt der Betriebsbremse (7) einen sicheren Betrieb des Fahrzeugs ermöglicht, wird erfindungsgemäß dadurch gelöst, daß bei einem Defekt der Betriebsbremse (7) mittels der Speicherbremse (18) ein in Abhängigkeit der Betätigung einer Betätigungseinrichtung (40) der Betriebsbremse (7) veränderbares Bremsmoment erzeugbar ist. In einer Ausführungsform ist die Speicherbremse (18) hydraulisch lösbar, wobei ein Druckminderventil (15) eingangsseitig an die Förderleitung (4) einer Pumpe (1) und ausgangsseitig an mindestens einen Bremszylinder (17) der Speicherbremse (18) anschließbar ist und das Druckminderventil (15) in Richtung einer Verringerung des den Bremszylinder (17) beaufschlagenden Druckes beaufschlagbar ist.

## Beschreibung

Die Erfindung betrifft ein Fahrzeug, insbesondere Flurförderzeug, mit einer Betriebsbremse und einer Speicherbremse.

Bei Fahrzeugen, insbesondere als Gegengewichtsgabelstaplern oder Schleppern ausgebildeten Flurförderzeugen, finden als Betriebsbremse beispielsweise hydraulische Bremsen Verwendung. Bei derartigen Betriebsbremsen wird durch eine vom Fahrer an einem Betätigungselement, beispielsweise einem Bremspedal, aufzubringende Kraft ein Bremsmoment erzeugt, wobei das Bremsmoment proportional zu der vom Fahrer erzeugten Kraft ist. Um die vom Fahrer aufzubringende Bedienkraft innerhalb bestimmter Grenzwerte zu halten, ist es bekannt, eine die vom Fahrer aufgebrachte Kraft verstärkende Hilfskraftbremse, eine sog. Servobremse, als Betriebsbremse zu verwenden.

Die Speicherbremse hat die Funktion einer Feststellbremse, die bei unbetätigtem Fahrantrieb gegebenenfalls nach einer bestimmten Zeitspanne betätigt werden kann und das Fahrzeug, beispielsweise an Steigungen, festhält. Die Speicherbremse weist ein fest eingestelltes Bremsmoment auf, das schlagartig aktiviert wird. Die Speicherbremse ist hierbei derart ausgelegt, daß auch bei maximaler Beladung des Fahrzeugs noch ein ausreichendes Bremsmoment erzeugt wird.

Bei einem derartigen Fahrzeug mit einer Betriebsbremse und einer separaten Speicherbremse kann es jedoch beim einem Defekt der Betriebsbremse und somit einer funktionsunfähigen Betriebsbremse zu einem Betriebszustand kommen, in dem das Fahrzeug durch die Speicherbremse abgebremst werden muß. Durch die Auslegung des Bremsmoments der Speicherbremse und somit einer hohen Bremsverzögerung kann es jedoch bei einem Flurförderzeug während einer derartigen Notbremsung zu einer Beschädigung oder einem Umkippen einer auf dem Flurförderzeug befindlichen Last und somit zu gefährlichen Betriebszuständen kommen.

Die vorliegenden Erfindung liegt die Aufgabe zugrunde, ein Fahrzeug der eingangs genannten Art zur Verfügung zu stellen, das bei einem Defekt der Betriebsbremse einen sicheren Betrieb des Fahrzeugs ermöglicht.

Diese Aufgabe wird erfindungsgemäß dadurch gelöst, daß bei einem Defekt der Betriebsbremse mittels der Speicherbremse ein in Abhängigkeit der Betätigung einer Betätigungseinrichtung der Betriebsbremse veränderbares Bremsmoment erzeugbar ist. Bei einem Defekt der Betriebsbremse und somit funktionsunfähiger Betriebsbremse wird das Bremsmoment der Speicherbremse kontinuierlich, entsprechend der Betätigung der Betätigungseinrichtung der Betriebsbremse, beispielsweise eines Bremspedals, aufgebaut und das Fahrzeug abgebremst. Dadurch ergibt sich eine Bremsverzögerung eines als Flurförderzeugs ausgebildeten Fahrzeugs, die eine Beschädigung oder ein Umkippen der Last verhindert, wodurch ein sicherer Betrieb des Flurförderzeugs bei einer Notbremsung ermöglicht wird.

In einer besonders bevorzugten Ausführungsform ist die Speicherbremse hydraulisch lösbar, wobei ein Druckminderventil eingangsseitig an die Förderleitung einer Pumpe und ausgangsseitig an mindestens einen Bremszylinder der Speicherbremse anschließbar ist und wobei das Druckminderventil in Richtung einer Verringerung des den Bremszylinder beauf schlagenden Druckes beaufschlagbar ist. Durch die Verringerung des ausgangsseitigen Drucks des Druckminderventils ist es auf einfache Weise möglich, das Bremsmoment der Speicherbremse kontinuierlich aufzubauen und die Speicherbremse in Richtung der Bremsstellung zu beaufschlagen.

Mit besonderem Vorteil weist das Druckminderventil einen mittels einer Regelfeder beaufschlagbaren Regelschieber auf, wobei eine mit dem Regelschieber in Verbindung stehende Feder vorgesehen ist, die der Regelfeder entgegenwirkt und mit der Betätigungseinrichtung der Betriebsbremse in Wirkverbindung bringbar ist. Durch die Einstellung der Regelfeder wird bei einem derartigen Druckminderventil der den Bremszylinder der Speicherbremse in die Lösestellung beaufschlagende Druck festgelegt. Durch eine der Regelfeder entgegenwirkende Feder, die mit der Betätigungseinrichtung in Verbindung bringbar ist, ist es auf einfache Weise möglich, in Abhängigkeit der Betätigung der Betätigungseinrichtung eine der Regelfeder entgegenwirkende Kraft am Regelschieber zu erzeugen und somit den den Bremszylinder der Speicherbremse beaufschlagenden Druck zu verringern, wodurch die Speicherbremse ein kontinuierlich ansteigendes Bremsmoment erzeugt.

Zweckmäßigerweise steht die den Regelschieber beaufschlagende Feder mit einem Federaufnahmedeckel, der in einer Gehäusebohrung des das Druckminderventil aufnehmenden Gehäuses längsverschiebbar angeordnet ist, in Verbindung, wobei der Federaufnahmedeckel mit der Betätigungseinrichtung in Wirkverbindung bringbar ist. Bei einer Auslenkung der Betätigungseinrichtung wird der Federaufnahmedeckel ausgelenkt und somit die Feder vorgespannt, wodurch das Druckminderventil in Richtung einer Verringerung des den Bremszylinder beaufschlagenden Druckes verstellt wird.

Mit besonderem Vorteil steht hierbei der Federaufnahmedeckel des Druckminderventils mit einem Hebel in Verbindung, der am Gehäuse drehbar befestigt ist und mit der Betätigungseinrichtung in Wirkverbindung bringbar ist. Mit einem Hebel kann entsprechend der Wahl des Anlenkpunktes des Hebels am Gehäuse, des Angriffspunktes des Hebels am Federaufnahmedeckel sowie des Angriffspunktes der Betätigungseinrichtung am Hebel an der Betätigungseinrichtung eine Hebelwirkung erzielt werden, so daß mit geringen Betätigungskräften und Betätigungswegen eine entsprechende Kraft zur Beaufschlagung der Feder am Regelschieber des Druckminderventils erzielt werden kann.

Eine bevorzugte Ausgestaltung der Erfindung besteht darin, daß die Betriebsbremse als hydraulische Bremse ausgebildet ist und ein Bremsventil aufweist, das eingangsseitig an eine Förderleitung der Pumpe angeschlossen ist und ausgangsseitig mit mindestens einem Bremszylinder in Wirkverbindung steht, wobei die Betätigungseinrichtung des Bremsventils mit dem Druckminderventil derart in Wirkverbindung bringbar ist, daß bei funktionsfähiger Betriebsbremse die Betätigungseinrichtung auf das Bremsventil der Betriebsbremse einwirkt und bei einem Defekt der Betriebsbremse die Betätigungseinrichtung auf das Bremsventil und das Druckminderventil der Speicherbremse einwirkt. Bei funktionsfähiger Betriebsbremse wird somit bei einer Auslenkung der Betätigungseinrichtung lediglich das Bremsventil der Betriebsbremse beaufschlagt und ein Bremsdruck zur Abbremsung des Fahrzeugs erzeugt. Bei einem Defekt der Betriebsbremse und somit funktionsunfähiger Betriebsbremse wird durch die Betätigung der Betätigungseinrichtung das Druckminderventil der Speicherbremse in Richtung einer Verringerung des Bremsdrucks beaufschlagt und somit das Flurförderzeug durch die Speicherbremse abgebremst.

Mit besonderem Vorteil sind das Bremsventil der Betriebsbremse und das Druckminderventil der Speicherbremse in einem Gehäuse auf parallelen Ventilachsen angeordnet, wobei die Betätigungseinrichtung ein Druckstück aufweist, das zur Betätigung des Bremsventils und des Druckminderventils vorgesehen ist. Dadurch ergibt sich eine besonders platzsparende Anordnung der aus den Ventilen der Betriebsbremse und der Speicherbremse bestehenden Bremsgruppe. Zudem kann durch eine derartige Anordnung des Bremsventils und des Druckminderventils auf parallelen Ventilachsen auf einfache Weise die Betätigung beider Ventile durch ein Druckstück der Betätigungseinrichtung erzielt werden.

In einer zweckmäßigen Ausführungsform ist das Druckstück mit dem Bremsventil der Betriebsbremse verbunden und bei einem Defekt der Betriebsbremse mit dem Hebel in Verbindung bringbar. Dadurch wird auf einfache Weise erzielt, daß bei einer Auslenkung der Betätigungseinrichtung durch das Druckstück das Bremsventil ständig beaufschlagt wird und bei einem Defekt der Betriebsbremse zusätzlich der Hebel und somit das Druckminderventil der Speicherbremse beaufschlagt werden kann.

Mit besonderem Vorteil ist das Druckstück im Bereich des Hebels mit einer Ausnehmung versehen. Die Ausnehmung ist hierbei derart bemessen, daß bei funktionsfähiger Betriebsbremse das Druckstück nicht in Kontakt mit dem Hebel gelangt. Durch eine derartige Ausnehmung am Druckstück kann auf einfache Weise erzielt werden, daß bei funktionsfähiger Betriebsbremse und somit üblichen Betätigungswegen die Betätigungseinrichtung nur auf das Bremsventil einwirkt und somit die Einstellung des Druckminderventils nicht verändert wird. Bei einem Defekt der Betriebsbremse wird die Betätigungseinrichtung mit einem größeren Betätigungsweg ausgelenkt, wodurch das Druckstück an der Ausnehmung mit dem Hebel in Kontakt gelangt und somit das Druckminderventil in Richtung einer Verringerung des den Bremszylinder der Speicherbremse beaufschlagenden Druckes verstellt wird.

In einer vorteilhaften Ausgestaltungsform der Erfindung weist die Betätigungseinrichtung ein Bremspedal auf, das mit mindestens einem Kniehebel verbunden ist, der um eine senkrecht zu den Ventilachsen des Bremsventils und des Druckminderventils angeordneten Schwenkachse drehbar am Gehäuse angeordnet ist und mit dem Druckstück in Verbindung steht. Bei auf parallelen Ventilachsen angeordnetem Bremsventil und Druckbegrenzungsventil kann durch einen mit einem Bremspedal in Verbindung stehenden Kniehebel, der um eine senkrecht zu den Ventilachsen angeordneten Schwenkachse drehbar gelagert ist und mit dem Druckstück verbunden ist, auf einfache Weise bei einer Betätigung des Bremspedals das Bremsventil und das Druckbegrenzungsventil beaufschlagt werden. Zudem ergibt sich hierdurch eine besonders platzsparende Anordnung der Betätigungseinrichtung an dem Gehäuse der Bremsgruppe.

Besondere Vorteile ergeben sich, wenn die Speicherbremse als Federspeicherbremse ausgebildet ist.

Zudem ergeben sich Vorteile, wenn die Betriebsbremse als Servobremse ausgebildet ist. Mit einer eine Hilfskraft erzeugenden Servobremse kann bei geringen Betätigungskräften eine hohes Bremsmoment an der Betriebsbremse erzielt werden.

Weitere Vorteile und Einzelheiten der Erfindung werden anhand des in den schematischen Figuren dargestellten Ausführungsbeispiels näher erläutert. Dabei zeigt
- Figur 1: den hydraulischen Schaltplan eines erfindungsgemäßen als Flurförderzeug ausgebildeten Fahrzeugs,
- Figur 2: eine Bremsgruppe eines erfindungsgemäßen Flurförderzeugs in einer perspektivischen Darstellung,
- Figur 3: die Bremsgruppe gemäß der Figur 2 in einer perspektivischen Darstellung mit einer Betätigungseinrichtung,
- Figur 4: einen vertikalen Schnitt durch die Bremsgruppe der Figur 2 mit einem Längsschnitt durch das Bremsventil und
- Figur 5: einen horizontalen Schnitt durch die Bremsgruppe der Figur 2 mit einem Längsschnitt durch das Druckminderventil.

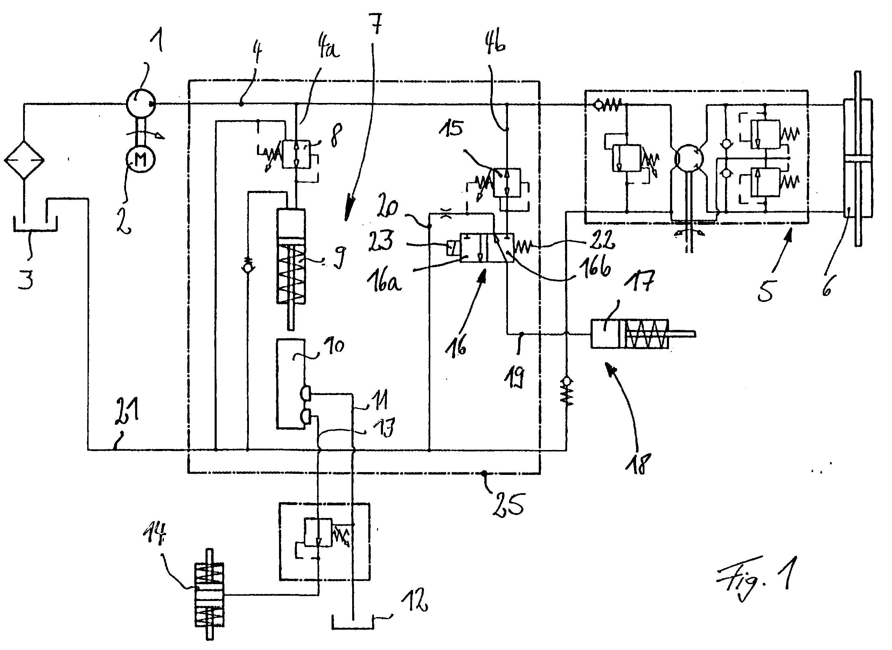

Die Figur 1 zeigt den hydraulischen Schaltplan eines erfindungsgemäßen als Flurförderzeug ausgebildeten Fahrzeugs mit einer hydraulischen Pumpe 1, die von einem Motor 2 angetrieben wird und Druckmittel aus einem Behälter 3 ansaugt und in eine Förderleitung 4 fördert. An die Förderleitung 4 ist eine hydraulische Lenkeinrichtung 5 mit einem Lenkzylinder 6 angeschlossen.

Von der Förderleitung 4 zweigt eine Förderzweigleitung 4a ab, die zur Versorgung einer als Servobremse ausgebildeten hydraulischen Betriebsbremse 7 vorgesehen ist. Die Betriebsbremse 7 weist ein als Druckminderventil ausgebildetes Bremsventil 8 auf, das in der Förderzweigleitung 4a angeordnet ist. Ausgangsseitig ist das Bremsventil 8 an einen Bremskraftverstärker 9 angeschlossen, der ein Hauptbremsventil 10 beaufschlagt. Das Hauptbremsventil 10 steht mit einer Eingangsleitung 11 in Verbindung, die mit einem Behälter 12 für Bremsflüssigkeit in Verbindung steht. Eine an das Hauptbremsventil 10 angeschlossene Ausgangsleitung 13 ist unter Zwischenschaltung eines Druckminderventils an einen Bremszylinder 14 angeschlossen.

Von der Förderleitung 4 zweigt eine weitere Förderzweigleitung 4b ab, die zur Versorgung einer als Federspeicherbremse ausgebildeten Speicherbremse 18 vorgesehen ist. Die Förderzweigleitung 4b ist unter Zwischenschaltung eines Druckminderventils 15 an den Eingang eines Schaltventils 16 angeschlossen ist. Das Schaltventil 16 weist eine erste Schaltstellung 16a auf, in der die Förderzweigleitung 4b mit einer zu einem Bremszylinder 17 der Speicherbremse 18 geführten Bremsleitung 19 in Verbindung steht. In der Schaltstellung 16a befindet sich die Speicherbremse 18 somit im gelösten Zustand, wobei durch die Einstellung des Druckminderventils 15 der den Bremszylinder 17 in die Lösestellung beaufschlagende Druck festgelegt ist. In einer zweiten Schaltstellung 16b ist die Bremsleitung 19 an eine Rücklaufleitung 20 angeschlossen, die mit einer an den Behälter 3 angeschlossenen Tankleitung 21 in Verbindung steht. In der Schaltstellung 16b ist somit der Bremszylinder 17 zum Behälter 3 entlastet, wodurch die Speicherbremse 18 in die Bremsstellung beaufschlagt wird. Das Schaltventil 16 ist in Richtung der Schaltstellung 16b mittels einer Feder 22 beaufschlagbar. In die Schaltstellung 16a ist das Schaltventil 16 elektrisch betätigbar, beispielsweise mittels eines Elektromagneten 23.

Die Ansteuerung des Elektromagneten 23 des Schaltventils 16 erfolgt beispielsweise mittels einer elektronischen Steuereinrichtung, die bei der Ansteuerung des Fahrantriebs durch eine Ansteuerung des Elektromagneten 23 das Schaltventil 16 in die Schaltstellung 16a beaufschlagt, wodurch die Speicherbremse 18 gelöst wird. Durch die elektronische Steuereinrichtung kann weiterhin einige Sekunden nachdem das Flurförderzeug angehalten hat, die Ansteuerung des Elektromagneten 23 zurückgenommen werden, wodurch das Schaltventil 16 durch die Feder 22 in die Schaltstellung 16b beaufschlagt wird und somit die Speicherbremse 18 in die Bremsstellung beaufschlagt wird. Bei einem elektrisch betriebenen Flurförderzeug kann dadurch die Ansteuerung der Antriebsmotoren des Fahrantriebs zurückgenommen werden, wodurch sich eine Energieeinsparung und somit eine höhere Betriebsdauer mit einer Batterieladung ergibt.

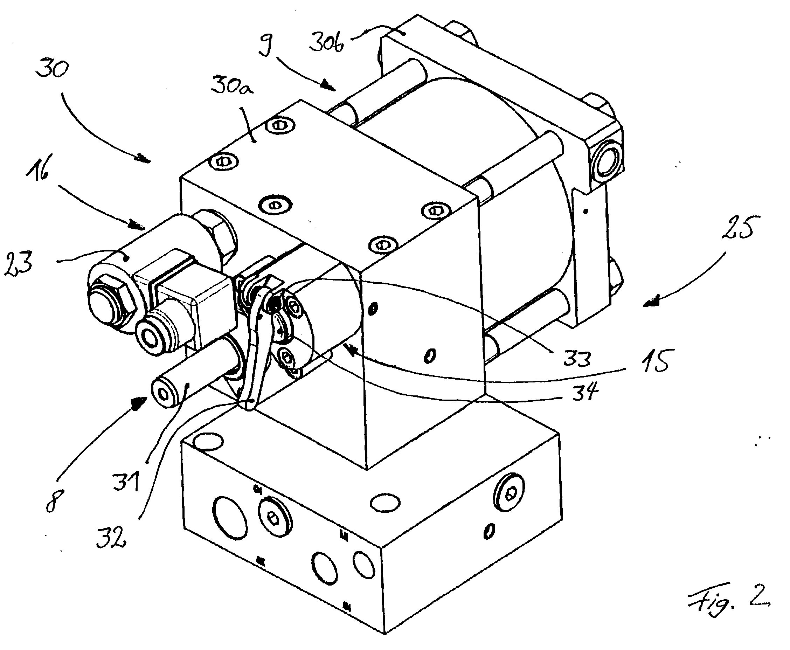

Das Bremsventil 8, der Bremskraftverstärker 9 und das Hauptbremsventil 10 der Betriebsbremse 7 sowie das Druckminderventil 15 und das Schaltventil 16 der Speicherbremse 18 sind zu einer Bremsgruppe 25 zusammengefaßt, deren konstruktiver Aufbau in den Figuren 2 bis 5 dargestellt ist.

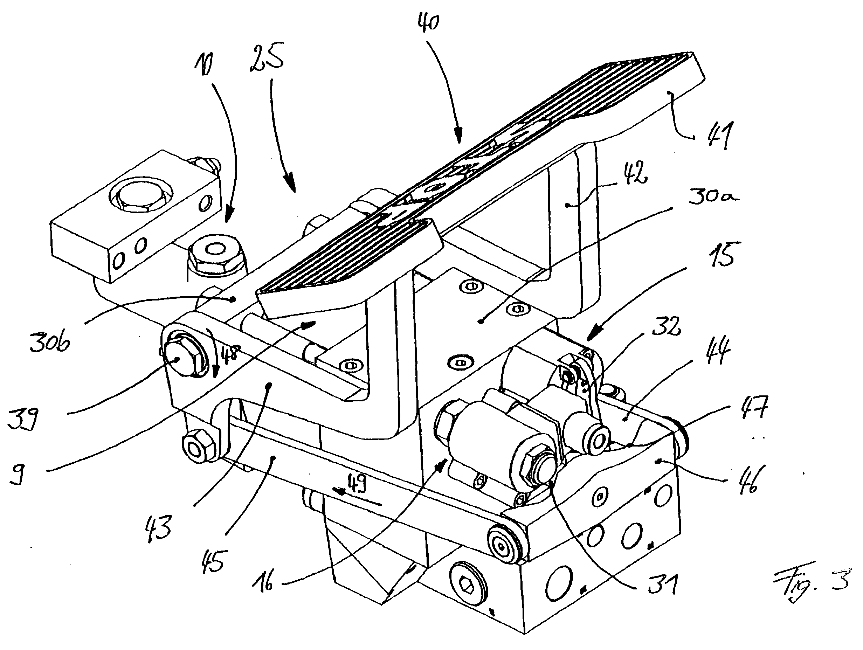

Die Figur 2 und 3 zeigen die Bremsgruppe 25 in perspektivischen Darstellungen, wobei die Bremsgruppe 25 ein Gehäuse 30 aufweist, in dem auf parallelen Ventilachsen das Schaltventil 16, das Druckminderventil 15 sowie das Bremsventil 8 angeordnet sind. Das Gehäuse 30 besteht hierbei aus einem Ventilblock 30a und einem mit dem Ventilblock 30a fest verbundenen Flansch 30b. Die Betätigung des Schaltventils 16 erfolgt mittels des Elektromagneten 23. Zur Betätigung des Bremsventils 8 ist ein Bolzen 31 vorgesehen, der an einer Stirnseite aus dem Ventilblock 30a herausgeführt ist. Das Druckminderventils 15 ist mittels eines Hebels 32 betätigbar, der an einem mit dem Ventilblock 30a verbundenen Gehäusebauteil 30d mittels eines Stiftes 33 drehbar gelagert ist und mit einem Federaufnahmedeckel 34 des Druckminderventils 15 in Wirkverbindung steht. Der Elektromagnet 23, der Bolzen 31 sowie der Hebel 32 sind hierbei an einer Stirnseite des Ventilblocks 30a angeordnet, wobei an der gegenüberliegenden Stirnseite des Ventilblocks 30a koaxial zur Ventilachse des Bremsventils 8, der Bremskraftverstärker 9 und das Hauptbremsventil 10 angeordnet sind. Der Bremskraftverstärker 9 ist hierbei zwischen dem Ventilblock 30a und dem Flansch 30b des Gehäuses 30 angeordnet. Das Hauptbremsventil 10 ist an dem dem Bremskraftverstärker 9 gegenüberliegenden Bereich des Flansches 30b befestigt.

An der Bremsgruppe 25 ist eine Betätigungseinrichtung 40 vorgesehen, die ein Bremspedal 41 aufweist. Das Bremspedal 41 ist mit beiderseits des Gehäuses 30 angeordneten winkelförmigen Kniehebeln 42, 43 verbunden, die an dem Flansch 30b des Gehäuses 30 um eine senkrecht zu den Ventilachsen des Bremsventils 8 und des Druckminderventils 15 angeordnete Drehachse 39 drehbar gelagert sind. An den Kniehebeln 42, 43 sind Zugstangen 44, 45 befestigt, die mittels eines Druckstücks 46 miteinander verbunden sind. Das Druckstück 46 steht hierbei über eine Schraubverbindung mit dem Bolzen 31 des Bremsventils 8 in Verbindung. Im Bereich des Hebels 32 ist das Druckstück 46 mit einer Ausnehmung 47 versehen.

Bei einer Betätigung des Bremspedals 41 werden somit die Kniehebel 42, 43 um die Drehachse 39 in Richtung 48 verschwenkt, wodurch die Zugstangen 44, 45 in Richtung 49 ausgelenkt werden. Durch die Ausnehmung 47 und die Verbindung der Druckstück 46 mit dem Bolzen 31 wird hierbei bei einer Betätigung des Bremspedals 41 zuerst der Bolzen 31 in Richtung zum Gehäuse 30 verschoben. Sofern der Bolzen 31 soweit ausgelenkt ist, daß das Druckstück 46 im Bereich der Ausnehmung 47 mit dem Hebel 32 in Verbindung gelangt und den Hebel 32 um den Stift 33 verschwenkt, wird weiterhin der Federaufnahmedeckel 34 in Richtung zum Gehäuse 30 verschoben. Die Ausnehmung 47 ist hierbei derart bemessen, daß im normalen Betrieb und somit bei funktionsfähiger Betriebsbremse, bei einer Betätigung des Bremspedals 41 das Druckstück 46 nicht mit dem Hebel 32 in Verbindung tritt.

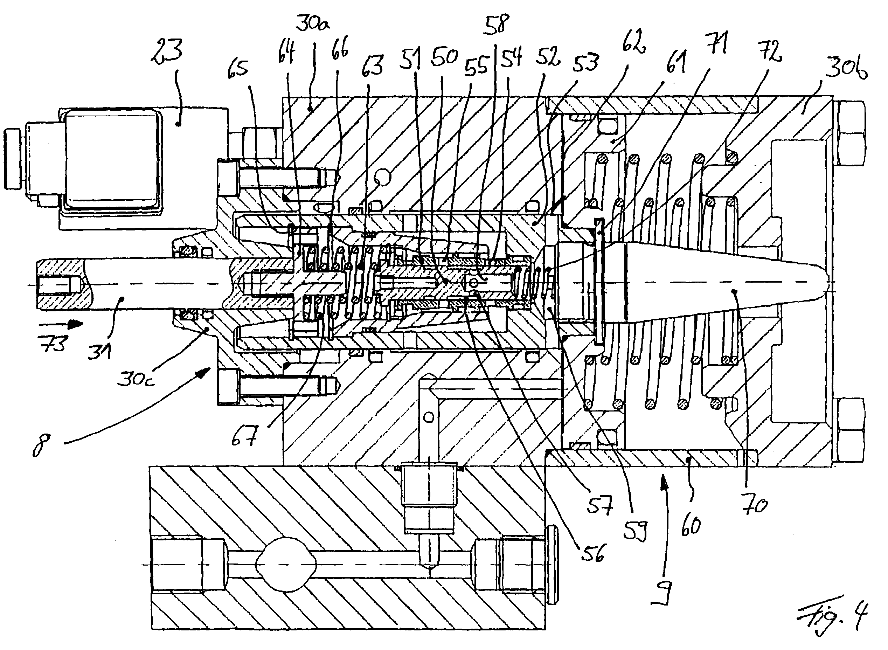

Die Figur 4 zeigt den Aufbau des Bremsventils 8, das einen Steuerschieber 50 aufweist, der in einer Steuerhülse 51 längsverschiebbar gelagert ist. Die Steuerhülse 51 ist in einer aus zwei Bauelementen bestehenden Hülse 52 angeordnet, die in einer im Ventilblock 30a des Gehäuses 30 angeordneten Gehäusebohrung 53 längsverschiebbar gelagert ist. Die Steuerhülse 51 weist eine Querbohrung 54 auf, die auf nicht mehr dargestellte Weise an die Förderzweigleitung 4a angeschlossen ist. Eine weitere an der Steuerhülse 51 angeordnete Querbohrung 55 steht auf nicht mehr dargestellte Weise mit dem Behälter 3 in Verbindung. Am Steuerschieber 50 ist eine Ringnut 56 vorgesehen, die mit der Querbohrung 54 bzw. 55 in Verbindung bringbar ist. Die Ringnut 56 steht über eine Querbohrung 57 mit einer im Steuerschieber 50 angeordneten Längsbohrung 58 in Verbindung, die in eine Stirnfläche des Steuerschiebers 50 mündet. Im Bereich der Stirnfläche ist in der Hülse 52 ein Ringraum 59 gebildet.

Der Bremskraftverstärker 9 weist einen in einem Zylinderrohr 60, das zwischen dem Ventilblock 30a und dem Flansch 30b angeordnet ist, längsverschiebbaren, federbelasteten Kolben 61 auf, wobei ein Druckraum 62 zwischen dem Kolben 61 und dem Zylinderrohr 60 gebildet ist, der mit dem Ringraum 59 in Verbindung bringbar ist.

An der Hülse 52 ist ein Betätigungskolben 70 befestigt, der auf nicht mehr dargestellte Weise zur Betätigung des Hauptbremsventils der Betriebsbremse vorgesehen ist. Der Betätigungskolben 70 weist einen Flansch 71 auf, der mit dem Kolben 61 in Verbindung steht. Zwischen dem Betätigungskolben 70 und dem Steuerschieber 50 ist eine Feder 72 vorgesehen.

Der Steuerschieber 50 steht in dem dem Ringraum 59 gegenüberliegenden Bereich mit einer Feder 63 in Verbindung, die an einem Federteller 64 abgestützt ist. Der Federteller 64 ist der in der Hülse 52 zwischen zwei Anschlägen 65, 66 längsverschieblich angeordnet und ist mit dem Bolzen 31 verbunden. Der Bolzen 31 ist hierbei in einem mit dem Ventilblock 30a verbundenen Gehäusebauteil 30c koaxial zum Steuerschieber 50 längsverschiebbar gelagert. Der Federteller 64 ist in Richtung des Anschlages 65 mittels einer Feder 67 beaufschlagbar, die an der Hülse 52 abgestützt ist.

Bei einer Betätigung des Bremspedals und somit einer Auslenkung des Bolzens 31 in Richtung 73, wird entsprechend der Betätigungskraft des Fahrers der Federteller 64 entgegen der Kraft der Feder 67 ausgelenkt und die Feder 63 sowie die Feder 72 gespannt. Dadurch wird der Betätigungskolben 70 mit der an dem Bolzen 31 anstehenden Betätigungskraft des Fahrers beaufschlagt. Gleichzeitig wird hierbei der Steuerkolben 50 mittels der Feder 63 entgegen der Kraft der Feder 72 nach in der Figur rechts ausgelenkt, wobei über die Ringnut 56 eine Verbindung von der Querbohrung 54 zur Querbohrung 57 und somit über die Längsbohrung 58 zum Ringraum 59 hergestellt wird. Dadurch wird der Druckraum 62 des Kolbens 61 des Bremskraftverstärkers 9 mit Druckmittel beaufschlagt, wodurch der Kolben 61 über den Flansch 71 den Betätigungskolben 70 mit einer Hilfskraft beaufschlagt. Zusätzlich zur Betätigungskraft des Fahrers wird somit der Betätigungskolben 70 mit einer Hilfskraft beaufschlagt, wobei die aus der Hilfskraft und der Betätigungskraft des Bremspedals resultierende Kraft mittels des Betätigungskolbens 70 auf das Hauptbremsventil 10 wirkt und somit das Flurförderzeug abgebremst wird.

Bei einem Defekt an einem hilfskrafterzeugenden Bauteil der Servobremse, beispielsweise dem Bremsventil 8 oder dem Bremskraftverstärker 9 und somit funktionsunfähiger Hilfskraftunterstützung, gelangt der Federteller 64 bei einer Betätigung des Bremspedals und somit des Bolzens 31 an den Anschlag 66, wodurch die Hülse 52 und somit der mit der Hülse 52 in Verbindung stehenden Betätigungskolben 70 von der an dem Bolzen 31 anstehenden Betätigungskraft des Fahrers beaufschlagt wird. Das Hauptbremsventil 10 wird hierbei nur von der Betätigungskraft des Fahrers beaufschlagt. Das Flurförderzeug kann somit bei einem Defekt der Servobremse bei verringerter Bremswirkung abgebremst werden.

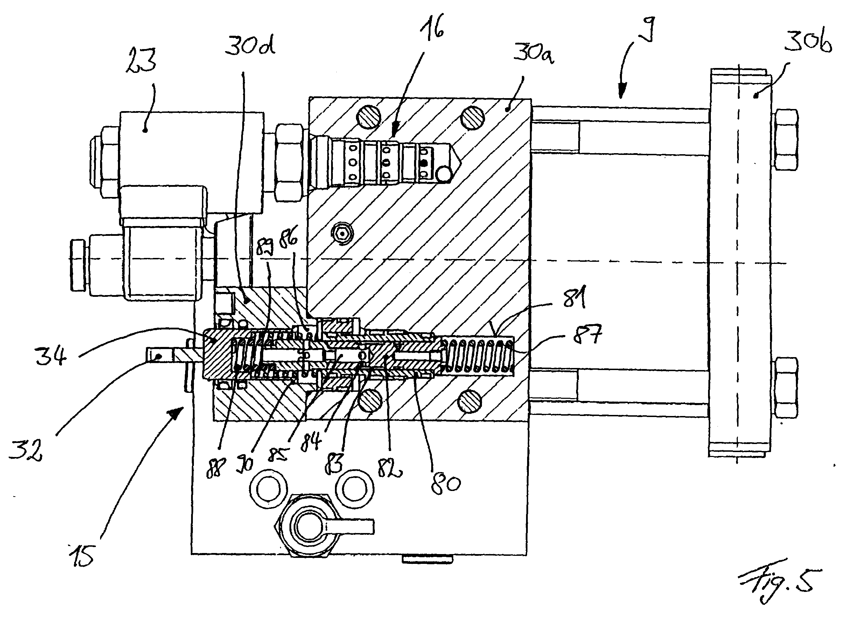

In der Figur 5 ist der Aufbau des Druckminderventils 15 der Speicherbremse 18 gezeigt, das einen in einer Hülse 80, die in einer Bohrung 81 des Ventilblocks 30a des Gehäuses 30 angeordnet ist, längsverschiebbaren Regelschieber 82 aufweist. Der Regelschieber 82 ist mit einer Ringnut 83 versehen, die auf nicht mehr dargestellte Weise über die Hülse 80 mit der Förderzweigleitung 4b in Verbindung bringbar ist. An die Ringnut 83 ist eine Querbohrung 84 angeschlossen, die in eine Längsbohrung 85 mündet. Die Längsbohrung 85 mündet in einen zwischen dem Regelschieber 82 und dem Ventilblock 30a gebildeten Ringraum 86, der auf nicht mehr dargestellte Weise mit dem Eingang des Schaltventils 16 in Verbindung steht. Der Regelschieber 82 steuert hierbei über die Ringnut 83 die Verbindung der Förderzweigleitung 4b zum Ringraum 86, wobei der Regelschieber 82 mittels einer Regelfeder 87 in Richtung einer die Verbindung von der Förderzweigleitung 4b zum Ringraum 86 öffnenden Stellung beaufschlagbar ist. In Richtung einer die Verbindung von der Förderzweigleitung 4b zum Ringraum 86 absperrenden Stellung ist der Regelschieber 82 von dem im Ringraum 86 anstehenden Druck beaufschlagt, so daß bei einem Anstieg des Drucks in der Förderzweigleitung 4b der Regelschieber 82 nach in der Figur rechts beaufschlagt wird und somit die Verbindung von der Förderzweigleitung 4b zur Ringnut 83 angedrosselt wird. Dadurch steht im Ringraum 86 und somit am Eingang des Schaltventils 16 ein der Kraft der Regelfeder 87 entsprechender Druck an.

Erfindungsgemäß ist der Regelschieber 82 des Druckminderventils 15 entgegen der Kraft der Regelfeder 87 von einer Feder 88 beaufschlagbar, die in einem der Regelfeder 87 gegenüberliegenden Bereich mit dem Regelschieber 82 in Wirkverbindung steht. Die Feder 88 stützt sich an einem koaxial zur Gehäusebohrung 81 angeordneten, topfförmigen Federaufnahmedeckel 34 ab, der in dem mit dem Ventilblock 30a des Gehäuses 30 verbundenen Gehäusebauteil 30d längsverschiebbar angeordnet ist. An dem aus dem Gehäusebauteil 30d herausragenden Ende steht der Federaufnahmedeckel 34 mit dem Hebel 32 in Verbindung. Bei nicht betätigtem Hebel 32 liegt der Federaufnahmedeckel 34 mittels einer Feder 89, die an der Hülse 80 abgestützt ist, an einem Anschlag 90 an, der von einem Flansch des Deckels 34 und einem in der Gehäusebohrung 81 abgeformten Absatz gebildet ist.

Bei einem Defekt der Betriebsbremse, beispielsweise einem Lufteintritt im hydraulischen Kreislauf des Hauptbremsventils 10 oder einem Bruch der Eingangsleitung 11 oder der Ausgangsleitung 13 und somit funktionsunfähiger Betriebsbremse 7, wird bei einer Betätigung des Bremspedals 41 durch das Druckstück 46 der Bolzen 31 in Richtung 73 ausgelenkt. Da bei einem derartigen Betriebszustand in der Betriebsbremse 7 kein hydraulischer Bremsdruck aufgebaut werden kann und somit am Bolzen 31 keine aus dem Bremsdruck resultierende Gegenkraft ansteht, wird der Bolzen 31 bei der Betätigung des Bremspedals 41 soweit in Richtung 73 ausgelenkt, daß das Druckstück 46 mittels der Ausnehmung 47 in Kontakt mit dem Hebel 32 gelangt. Hierdurch wird bei einer weiteren Betätigung des Bremspedals 41 der Hebel 32 um den Stift 33 verschwenkt und somit der Federaufnahmedeckel 34 nach in der Figur 5 rechts ausgelenkt, wodurch die Feder 88 vorgespannt und entsprechend der Auslenkung des Federaufnahmedeckels 34 eine der Regelfeder 87 entgegenwirkende Kraft erzeugt wird. Dadurch wird der Regelschieber 82 in Richtung einer die Verbindung von der Förderzweigleitung 4b zum Ringraum 86 androsselnde Stellung beaufschlagt und somit das Druckminderventil 15 in Richtung einer Verringerung des in der Bremsleitung 19 anstehenden Ausgangdrucks verstellt. Durch die Verringerung des in der Bremsleitung 19 anstehende Drucks wird der Bremszylinder 18 in Richtung der Bremsstellung beaufschlagt, wobei das Bremsmoment der Speicherbremse 18 in Abhängigkeit der von der Feder 88 erzeugten Kraft und somit in Abhängigkeit von der Betätigung der Betätigungseinrichtung 40 der Betriebsbremse 7 kontinuierlich erzeugt wird. Das Flurförderzeug kann somit bei einem Defekt der Betriebsbremse 7 durch die Speicherbremse 18 sicher abgebremst werden.

Die Erfindung kann bei elektrisch betriebenen Fahrzeugen, insbesondere Flurförderzeugen, mit Drehstrommotoren oder Gleichstrommotoren als Fahrmotoren sowie bei verbrennungsmotorisch betrieben Fahrzeugen mit einem hydrodynamischen oder hydromechanischen Fahrantrieb verwendet werden, wobei bei elektrisch betriebenen Fahrzeugen zusätzlich zur Betriebsbremse eine Gegenstrombremse oder eine Nutzstrombremse vorgesehen werden kann.

## Patentansprüche

1. Fahrzeug, insbesondere Flurförderzeug, mit einer Betriebsbremse und einer Speicherbremse, **dadurch gekennzeichnet**, daß bei einem Defekt der Betriebsbremse (7) mittels der Speicherbremse (18) ein in Abhängigkeit der Betätigung einer Betätigungseinrichtung (40) der Betriebsbremse (7) veränderbares Bremsmoment erzeugbar ist.

2. Fahrzeug nach Anspruch 1, dadurch gekennzeichnet, daß die Speicherbremse (18) hydraulisch lösbar ist, wobei ein Druckminderventil (15) eingangsseitig an die Förderleitung (4) einer Pumpe (1) und ausgangsseitig an mindestens einen Bremszylinder (17) der Speicherbremse (18) anschließbar ist und wobei das Druckminderventil (15) in Richtung einer Verringerung des den Bremszylinder (17) beaufschlagenden Druckes beaufschlagbar ist.

3. Fahrzeug nach Anspruch 2, dadurch gekennzeichnet, daß das Druckminderventil (15) einen mittels einer Regelfeder (87) beaufschlagbaren Regelschieber (82) aufweist, wobei eine mit dem Regelschieber (82) in Verbindung stehende Feder (88) vorgesehen ist, die der Regelfeder (82) entgegenwirkt und mit der Betätigungseinrichtung (40) der Betriebsbremse in Wirkverbindung bringbar ist.

4. Fahrzeug nach Anspruch 3, dadurch gekennzeichnet, daß die den Regelschieber (82) beaufschlagende Feder (88) mit einem Federaufnahmedeckel (34), der in einer Gehäusebohrung (81) des das Druckminderventil (15) aufnehmenden Gehäuses (30) längsverschiebbar angeordnet ist, in Verbindung steht, wobei der Federaufnahmedeckel (34) mit der Betätigungseinrichtung (40) in Wirkverbindung bringbar ist.

5. Fahrzeug nach einem der Ansprüche 4, dadurch gekennzeichnet, daß der Federaufnahmedeckel (34) mit einem Hebel (32) in Verbindung steht, der am Gehäuse (30) drehbar befestigt ist und mit der Betätigungseinrichtung (40) in Wirkverbindung bringbar ist.

6. Fahrzeug nach einem der Ansprüche 2 bis 5, wobei die Betriebsbremse (7) als hydraulische Bremse ausgebildet ist und ein Bremsventil (8) aufweist, das eingangsseitig an die Förderleitung (4) der Pumpe (1) angeschlossen ist und ausgangsseitig mit mindestens einem Bremszylinder (14) in Wirkverbindung steht, dadurch gekennzeichnet, daß die Betätigungseinrichtung (40) des Bremsventils (8) mit dem Druckminderventil (15) in Wirkverbindung bringbar ist, wobei bei funktionsfähiger Betriebsbremse (7) die Betätigungseinrichtung (40) auf das Bremsventil (8) der Betriebsbremse (7) einwirkt und bei einem Defekt der Betriebsbremse (7) die Betätigungseinrichtung (40) auf das Bremsventil (8) und das Druckminderventil (15) der Speicherbremse (18) einwirkt.

7. Fahrzeug nach Anspruch 6, dadurch gekennzeichnet, daß das Bremsventil (8) der Betriebsbremse (7) und das Druckminderventil (15) der Speicherbremse (18) in einem Gehäuse (30) auf parallelen Ventilachsen angeordnet sind, wobei die Betätigungseinrichtung (40) ein Druckstück (46) aufweist, das zur Betätigung des Bremsventils (8) und des Druckminderventils (15) vorgesehen ist.

8. Fahrzeug nach Anspruch 7, dadurch gekennzeichnet, daß das Druckstück (46) mit dem Bremsventil (8) der Betriebsbremse (7) verbunden ist und bei einem Defekt der Betriebsbremse (7) mit dem Hebel (2) in Verbindung bringbar ist.

9. Fahrzeug nach Anspruch 7 oder 8, dadurch gekennzeichnet, daß das Druckstück (46) im Bereich des Hebels (32) mit einer Ausnehmung (47) versehen ist.

10. Fahrzeug nach einem der Ansprüche 7 bis 9, dadurch gekennzeichnet, daß die Betätigungseinrichtung (40) ein Bremspedal (41) aufweist, das mit mindestens einem Kniehebel (42, 43) verbunden ist, der um eine senkrecht zur Ventilachse des Bremsventils (8) und des Druckminderventils (15) angeordnete Schwenkachse (39) drehbar am Gehäuse (30) angeordnet ist und mit dem Druckstück (46) in Verbindung steht.

11. Fahrzeug nach einem der vorangegangenen Ansprüche, dadurch gekennzeichnet, daß die Speicherbremse (18) als Federspeicherbremse ausgebildet ist.

12. Fahrzeug nach einem der vorangegangenen Ansprüche, dadurch gekennzeichnet, daß die Betriebsbremse (7) als Servobremse ausgebildet ist.
